# EUROPEAN PATENT APPLICATION

(11) **EP 4 563 370 A1**
(43) Date of publication of application: **04.06.2025**
(21) Application number: 24213257.9
(22) Date of filing: 15.11.2024
(51) Int. Cl.: B60B 3/00, B60B 3/10, B60B 7/00, B60B 7/04, B60B 7/20, B60B 19/10, B60B 3/02

(54) **CONFIGURABLE WHEEL FOR A VEHICLE**

(30) Priority: 17.11.2023 IT 202300024399
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A wheel (4) for a vehicle (1) includes a rim (5) having a rotation axis (H) and one or more openings (5d, 11) for placing an inner volume (V) of the rim (5) in communication with a space outside the rim (5) and in front of the rim (5) according to the rotation axis (H), characterized by comprising one or more vanes (12) coupled to the rim (5) in a movable manner between a closed configuration and an open configuration, wherein the one or more vanes (12) close and open at least partially the one or more openings (5d, 11), respectively.

## Description

### CROSS-REFERENCE TO RELATED APPLICATIONS

This patent application claims priority from Italian patent application no. 102023000024399 filed on November 17, 2023, the entire disclosure of which is incorporated herein by reference.

### TECHNICAL FIELD

The invention relates to a wheel for a vehicle, in particular for a motor vehicle and even more in particular for a motor vehicle of sports type.

### PRIOR ART

Generally, in the vehicle sector and especially in that of sports or racing motor vehicles, the need is felt to minimize energy consumption.

More specifically, the aerodynamic drags of the vehicles are known to correspond to energy losses, sometimes made necessary or convenient for various reasons, for example for producing downforce or for conveying cooling air on some specific components.

In particular, the rims of the wheels normally have openings along the axes of the wheels, thereby allowing conveying air flows on the brakes or possibly on electric motors, in cases of integration of the electric motors into the wheels, for cooling the same.

It is evident that the openings cause the drawback of increasing the aerodynamic drags of the motor vehicle.

Therefore, the specific need is felt to mitigate the latter drawback, still anyway guaranteeing at least a sufficient cooling of the brakes or of the electric motors.

An object of the invention is to satisfy at least one of the needs set forth above, preferably in a simple and reliable manner.

### DESCRIPTION OF THE INVENTION

The object is achieved by a wheel for a motor vehicle as defined in claim 1.

The dependent claims define particular embodiments of the invention.

### BRIEF DESCRIPTION OF THE DRAWINGS

In the following, an embodiment of the invention is described for a better understanding thereof by way of nonlimiting example and with reference to the accompanying drawings, wherein:
- Figure 1 is a perspective view of a motor vehicle comprising a wheel according to the invention;

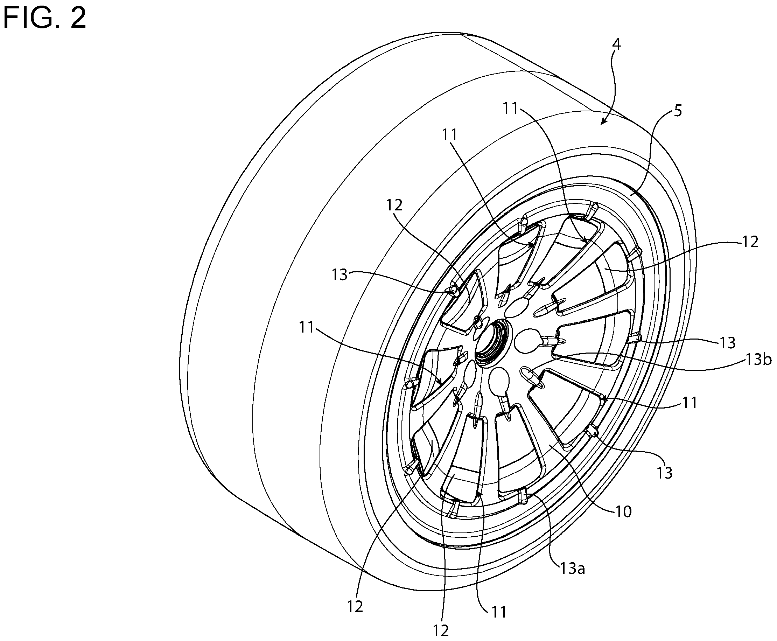

- Figure 2 is a view, in perspective and on an enlarged scale, of an outer side of the wheel;
- Figure 3 is similar to Figure 2 and shows the wheel in a different operating configuration;

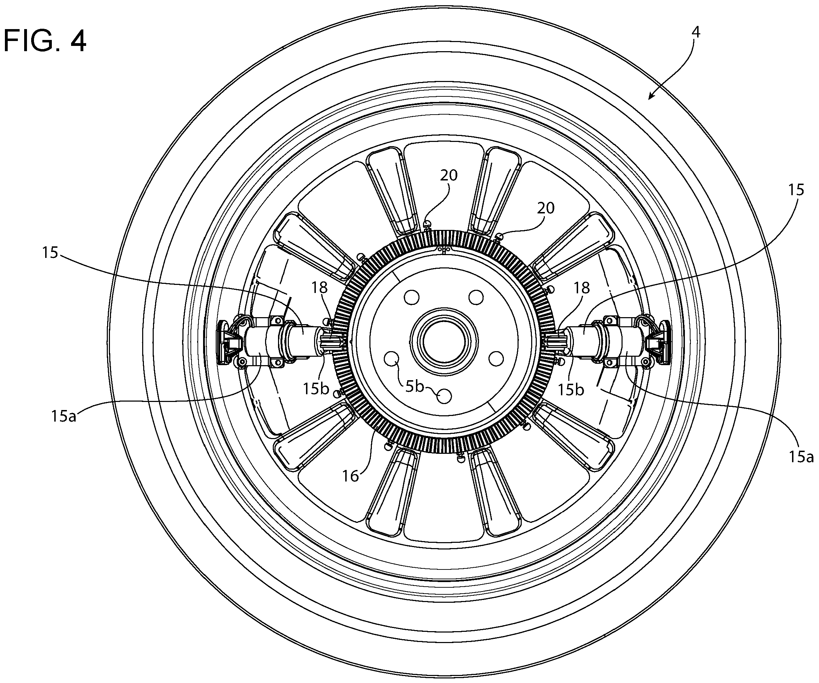

- Figure 4 is a side view of the wheel from an inner side of the wheel;

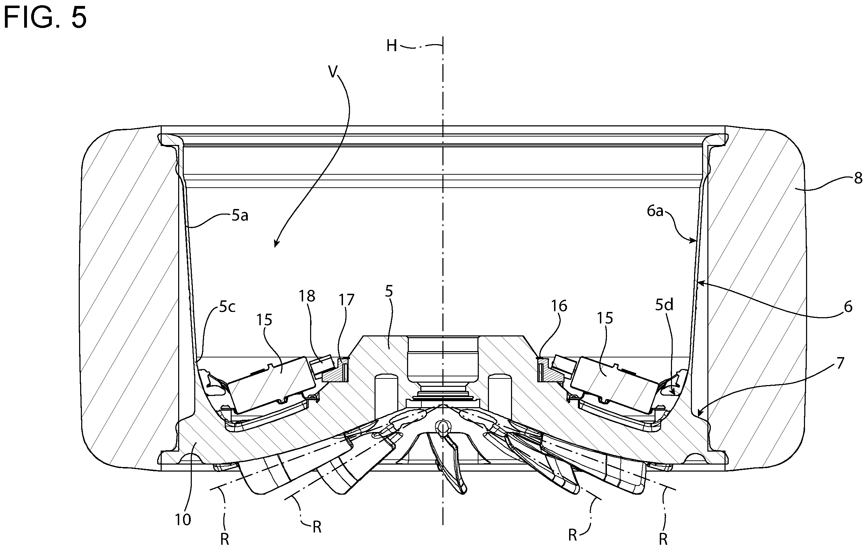

- Figure 5 is a section of the wheel according to a horizontal plane, and

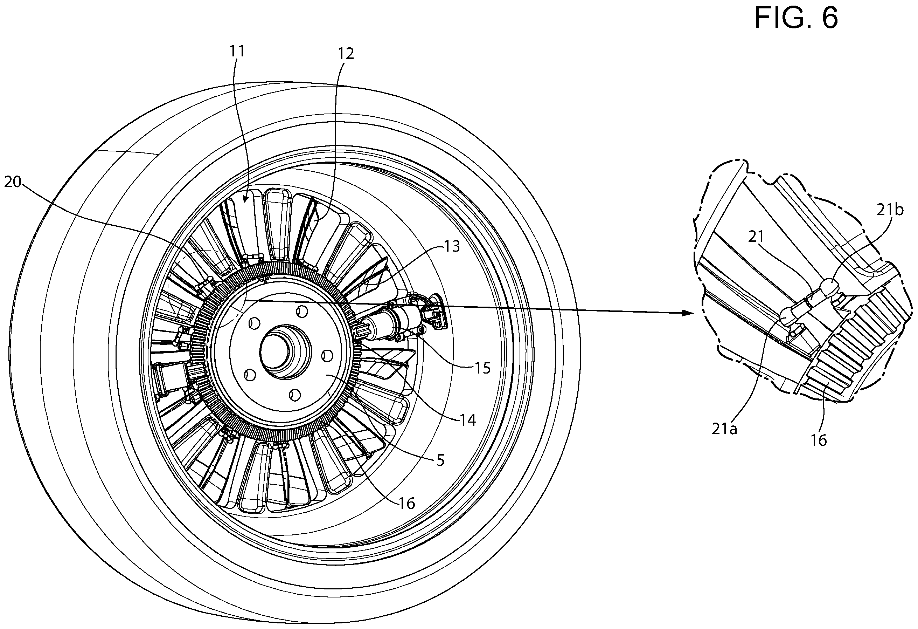

- Figure 6 is a perspective view of the inner side of the wheel with in addition an enlargement of a detailed inner portion of the wheel.

### EMBODIMENTS OF THE INVENTION

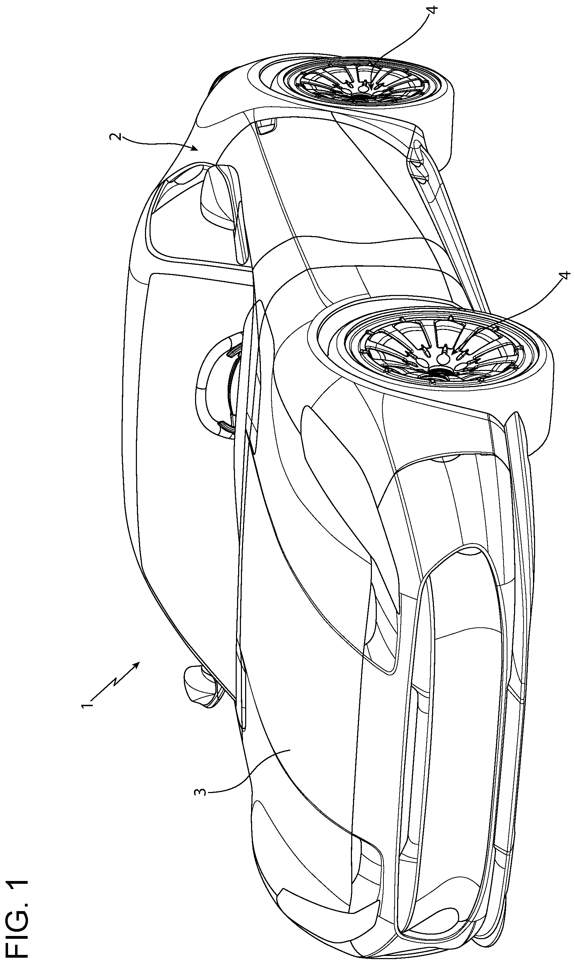

In Figure 1, reference numeral 1 is used to indicate, as a whole, a vehicle, specifically a motor vehicle, in particular of sports or racing type.

The motor vehicle 1 comprises a body 2, in turn including a frame not illustrated and a bodywork 3 carried by the frame and defining the outer surfaces of the motor vehicle 1.

Furthermore, the motor vehicle 1 comprises a plurality of wheels 4, only two of which are illustrated in Figure 1. The wheels 4 are coupled to the body 2 or more precisely to the frame by means of suspensions not illustrated.

The wheels 4 define the unsprung mass of the motor vehicle 1. The suspensions suspend the body 2 or more precisely the frame with respect to the wheels 4, therefore the body 2 forms part of the sprung mass of the motor vehicle 1.

The wheels 4 have similar features with respect to one another, with the exception for example of the dimensions, therefore only one of the wheels 4 will be described more specifically, it being understood that the features described for one of the wheels 4 will also be applicable to the others.

The wheel 4 comprises a rim 5 having in particular a portion 5a with a tubular geometry. The rim 5 or more precisely the portion 5a has an axis H, about which the rim 5 extends.

The rim 5 defines an inner volume V, i.e. in particular the volume delimited radially inside the portion 5a.

The axis H coincides with the rotation axis of the wheel 4. In fact, the rim 5 rotates about the axis H during the rotation of the wheel 4.

Furthermore, the axis H is transversal with respect to a direction of advancement of the motor vehicle 1. In particular, the axis H is parallel to the pitch axis of the motor vehicle 1.

The rim 5 further has an outer side surface 6 extending about the axis H, thereby defining a surface of revolution, which encloses the volume V on the inside thereof. More precisely, the volume V is enclosed or delimited inside an inner side surface 6a of the rim 5.

The outer surface 6 further defines a seat or channel 7 configured to receive a tyre 8 of the wheel 4. The seat 7 is arranged on the opposite side of the volume V with respect to the portion 5a or more in general of the rim 5 according to a radial direction.

In particular, the tyre 8 is mounted on the rim 5 at the seat 7, more in particular according to typical modes.

In other words, the seat 7 allows mounting the tyre 8.

Furthermore, the wheel 4 comprises a wheel hub unit not illustrated, for example of known type, having a rotor portion fixed with respect to the rim 5, for example fastened by means of bolts (the rim 5 preferably comprises a plurality of holes 5b for the fastening to the rotor portion, regardless of the type of fastening), and a stator portion which supports the rotor portion by means of roller bearings of the wheel hub unit.

According to an example, the wheel 4 can comprise an electric motor not illustrated for driving into rotation the rotor portion with respect to the stator portion, i.e. for driving into rotation the rim 5 or the wheel 4 about the axis H.

Conveniently, the wheel 4 comprises a rim cover 10 fixed with respect to the rim 5. In particular, the rim cover 10 is made in one single piece with the rim 5, namely is seamlessly fixed to the rim 5. Therefore, the rim cover 10 can be possibly considered integral part of the rim 5. However, this is not essential.

In fact, according to other examples, the rim cover 10 could be fastened to the rim 5 in a releasable or detachable manner, in the sense that the separation of the rim cover 10 from the rim 5 could occur without causing any damage to the rim cover 10 or to the rim 5. Also in these examples, the rim cover 10 could be considered as forming part of the rim 5.

In general, the rim cover 10 is optional and could thus be absent.

The rim cover 10 extends transversely or orthogonally to the axis H.

The rim cover 10 is arranged so as to cover the rim 5 frontally, i.e. according to the axis H, on the outer side of the wheel 4.

On the outer side of the wheel 4, the rim 5 has an end 5c extending in a ring shape about the axis H so as to delimit internally, more precisely according to a radial direction, an opening 5d of the rim 5 according to the axis H.

The rim cover 10 covers frontally (i.e. according to the axis H, on the outer side of the wheel 4) and partially the latter opening 5d according to the axis H.

In fact, the rim cover 10 has, in turn, a plurality of through openings 11 according to the axis H.

The openings 11 place the outside of the rim 5 in communication with the opening 5d, i.e. with the inner volume V of the rim 5. More precisely, the openings 11 place the volume V in communication with a space outside the rim 5 and in front of the rim 5 according to the axis H, i.e. a space adjacent to the outer side of the rim 5 according to the axis H.

From this it is clear that the rim cover 10 does not cover or does not completely close the opening 5d according to the axis H.

The openings 11 correspond to respective channels on the rim cover 10. The channels extend according to respective directions which are not necessarily rectilinear or parallel to the axis H, but the channels are anyway configured to allow the air to pass through the rim cover 10 through a direction coinciding with the axis H, i.e. through the thickness thereof.

The wheel 4 further comprises a plurality of bulkheads or vanes 12 coupled to the rim 5 in a movable manner with respect to the rim 5 between two configurations relative to the rim 5, among which a closed configuration and an open configuration, where the vanes 12 are respectively configured or arranged so as to close and open at least partially the openings 11, in particular so as to prevent the air from passing through and to allow the air to pass through the rim cover 10 through the direction coinciding the with axis H, respectively.

Based on the fact that the vanes 12 prevent the air from passing through the rim cover 10, it is evident in a direct and unequivocable manner that the vanes 12 in the closed configuration close the openings 11 completely.

Each one of the vanes 12 in the closed configuration covers a corresponding one of the openings 11.

In the illustrated embodiment, the openings 11 and the respective vanes 12 have a trapezoidal shape and/or are tapered radially toward the axis H (i.e. narrower at the inner radial ends and wider at the outer radial ends). Alternatively or additionally, the openings 11 and the respective vanes 12 have cross-sections according to a plane orthogonal to the axis H or according to planes incident to the axis H with a trapezoidal shape and/or a shape tapered radially toward the axis H (i.e. narrower at the inner radial ends and wider at the outer radial ends).

In the closed configuration, the vanes 12 are transversal with respect to the axis H. Regardless of this, the vanes 12 could be aligned with the axis H or parallel to the axis H or oriented like the axis H in the open configuration.

Should the rim cover 10 be absent, the vanes 12 would be configured or arranged directly for closing and respectively opening at least in part the opening 5d in the closed and open configurations. In such case, the opening 5d would place the volume V in communication with the outer space in front of the rim 5 according to the axis H, i.e. with the space adjacent to the outer side of the rim 5 according to the axis H.

Preferably, the opening 5d or the openings 11 place the volume V in direct communication with the outer space in front of the rim 5, i.e. with the space adjacent to the outer side of the rim 5 according to the axis H.

The closing of the opening 5d directly by means of the vanes 12 or indirectly by means of the closing of the openings 11 involves a reduction in the aerodynamic drag of the motor vehicle 1 since the passage of the air through the opening 5d on the outer side of the wheel 4 is prevented (based on this, in particular, it is derivable that the vanes 12 would completely close the opening 5d, in the absence of the rim cover 10). On the other hand, the air flows inside the rim 5 can be directed toward components not illustrated of the wheel 4 or of the motor vehicle 1 due to their cooling. Examples of components can include a motor integrated into the wheel 4 for driving into rotation the wheel 4 or braking devices, such as pads, brake disks, and the like.

More specifically, one, some, or all of the vanes 12 are hinged or pivoted to the rim 5, in particular about respective radial axes R with respect to the axis H. The axes R could be rectilinear, but this is not strictly necessary.

Specifically, each one of the vanes 12 comprises a pivot 13, in particular extending along a corresponding one of the axes R. The pivot 13 is fixed with respect to its vane 12 and has an end 13a supported in a rotatable manner by the rim 5 inside a corresponding seat obtained on the rim 5. Preferably, the pivot 13 has a further end 13b opposite the end 13a according to the axis R; also the end 13b is supported in a rotatable manner by the rim 5 or more precisely by the rim cover 10 inside a corresponding seat obtained on the rim 5 or more precisely on the rim cover 10, respectively.

In other words, the vanes 12 are pivoted or rotatable about the axes R between the closed configuration and the open configuration.

Furthermore, the wheel 4 comprises a mechanism 14 configured or drivable for moving the vanes 12 from the open configuration to the closed configuration and vice versa.

The mechanism 14 is configured to coordinate the movement of the vanes 12. In fact, the vanes 12 can move from the closed configuration to the open configuration in a coordinated manner by means of the mechanism 14.

In particular, the wheel 4 comprises one or more motors 15 coupled to the mechanism 14 and configured to drive the mechanism 14.

Preferably, the wheel 4 also comprises a control unit configured to control the configuration or arrangement of the vanes 12 by means of the motors 15 and the mechanism 14. For example, the control unit is configured to control the motors 15 so as to bring the vanes 12 in the open configuration by means of the mechanism 14 based on an operational state of the wheel 4 or of the motor vehicle 1, for example when a given pre-established condition occurs, in particular for cooling some specific components of the wheel 4 or of the motor vehicle 1.

For example, in fact, the condition can pertain to a heating state of such components. In particular, the condition could occur when the temperature of one or more of the components exceeds a threshold, possibly for a time interval with a duration longer than a further threshold.

Therefore, the operational state of the motor vehicle 1 comprises the temperature of the one or more components.

Normally, although not necessarily, the vanes 12 are in the closed configuration, in particular with the aim to reduce the aerodynamic drag of the motor vehicle 1.

Conveniently, the control unit is configured to control the motors 15 so as to bring the vanes 12 in the closed configuration by means of the mechanism 14 when the condition ceases to occur.

Therefore, the control unit is configured to move the vanes 12 between the closed configuration and the open configuration.

Alternatively or additionally, the control unit is configured to control the configuration or arrangement of the vanes 12, i.e. to move the vanes 12 from the open configuration to the closed configuration or vice versa, based on a request or more precisely on a request signal of a driver of the motor vehicle 1, for example emitted by means of a specially provided control of the motor vehicle 1.

Alternatively or additionally, the control unit is configured to control the configuration or arrangement of the vanes 12, or more precisely to move the vanes 12 from the closed configuration to the open configuration, based on a request signal for braking the motor vehicle 1.

In fact, the additional aerodynamic drag caused by the open configuration can be controlled on purpose for braking the motor vehicle 1.

In particular, the braking request signal could be emitted on a voluntary basis of the driver by means of a specially provided control of the motor vehicle 1 or also by the control unit in an automated manner, for example in the case of autonomous or semi-autonomous drive of the motor vehicle 1. In the latter case, more in general, the operational state comprises a requested or necessary or suitable deceleration of the motor vehicle 1. For example, the deceleration can become requested or necessary or appropriate based on the features of the road travelled by the motor vehicle 1 and/or on the dynamic state of current motion (for example including position, speed, acceleration) of the motor vehicle 1, i.e. based on the odometry.

The motors 15 and the mechanism 14 form or are part of a drive assembly for moving the vanes 12 from the closed configuration to the open configuration and vice versa. The control unit is configured to control the drive assembly for moving the vanes 13 between the open configuration and the closed configuration, namely from the closed configuration to the open configuration and vice versa.

Preferably, the mechanism 14 comprises a rotor, specifically comprising a crown gear 16, and even more specifically defined by the crown gear 16.

In particular, the crown gear 16 is arranged around the axis H.

The crown gear 16 is conveniently arranged radially inside the rim 5, in particular behind the rim cover 10 according to the axis H.

The crown gear 16 is supported by the rim 5 in a rotatable manner with respect to the rim 5 about the axis H, for example by means of a bearing 17 between the crown gear 16 and the rim 5.

Furthermore, the mechanism 14 comprises one or more pinion gears 18, in particular coupled to the respective motors 15 so as to be driven into rotation by the motors 15; the pinion gears 18 are arranged to mesh with the crown gear 16, i.e. they mesh with the crown gear 16. In this manner, a rotation of the pinion gears 18, for example by means of the respective motors 15, causes the rotation of the crown gear 16 or more in general of the rotor.

Preferably, each one of the pinion gears 18 forms a bevel or hypoid gear with the crown gear 16.

Each one of the motors 15 has a stator portion 15a fastened to the rim 5 and a rotor portion 15b rotatable with respect to the stator portion 15a and coupled to a corresponding one of the pinion gears 18 so as to transmit its rotation to the latter. In this case, the stator portion 15a is fixed with respect to the corresponding pinion gear 18.

Preferably, the stator portion 15a and the rotor portion 15b are coaxial with respect to each other.

In particular, the rotor portion 15b and the corresponding pinion gear 18 are coaxial with respect to each other.

The mechanism 14 further comprises a plurality of transmissions 20, in particular of articulated type, each one of which is configured to transmit a rotation of the crown gear 16 to a corresponding one of the vanes 12.

The transmissions 20 transmit the rotation of the crown gear 16 respectively to the vanes 12 simultaneously and in a predefined manner. More specifically, the transmissions 20 all have a same transmission ratio, i.e. are configured to transmit the same rotation to all the vanes 12 in a manner corresponding to a given rotation of the crown gear 16, i.e. according to a predefined and in particular constant functional link.

Preferably, at least one of the transmissions 20 or more in particular each one of the transmissions 20 comprises or is defined by a crank 21 having an end 21a fixed with respect to the corresponding vane 12, or more precisely to the corresponding pivot 13, and an end 21b coupled to the crown gear 16. More in particular, the end 21b is hinged to the crown gear 16, specifically about an axis parallel to the axis R of the corresponding pivot 13.

In general, the presence of the pivots 13 is independent of the presence of the cranks 21 and vice versa.

The transmissions 20 with the illustrated cranks 21 represent an advantageous example but could be replaced by transmissions of different type, for example including gear wheels.

Preferably, the wheel 4 comprises a power storage device, for example a battery, for powering the motors 15. For example, the power storage device could be carried in a fixed position by the stator portion of the wheel hub unit.

Furthermore, preferably, the wheel 4 comprises an alternator configured to convert the rotation of the wheel 4 or of the rim 5 into power by means of induction and to consequently recharge the power storage device.

The alternator can include a stator fixed to the stator portion of the wheel hub unit and a rotor fixed to the rotor portion of the wheel hub unit, for example.

Alternatively or additionally, the alternator could power the motors 15, for example directly.

More in general, the wheel 4 can comprise induction means or an induction device for generating power from the rotation of the wheel 4 or of the rim. The power is utilized for recharging the power storage device or for powering the motors 15, for example directly.

Based on the foregoing, the advantages of the wheel 4 according to the invention are evident.

The vanes 12 can be used selectively for reducing or increasing the aerodynamic drag of the motor vehicle 1 by means of the closed and open configurations, respectively.

Therefore, the vanes 12 are configured to reduce the aerodynamic drag of the motor vehicle 1 in the closed configuration and/or to increase the aerodynamic drag of the motor vehicle 1 in the open configuration.

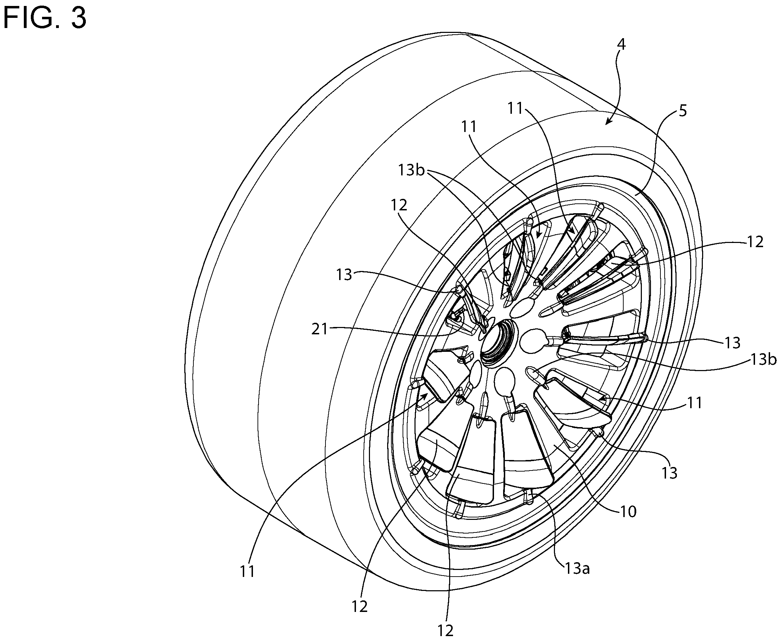

In particular, as is visible in Figure 3, the vanes 12 in the open configuration increase the aerodynamic drag of the motor vehicle 1 cooperating with the air outside the rim 5, since the vanes 12 in the open configuration are exposed to the air outside the rim 5.

For example, the controlled increase in the aerodynamic drag is advantageously usable for contributing to braking the motor vehicle 1.

Therefore, the control unit is configured to brake the motor vehicle 1 in response to the braking request signal controlling the movement of the vanes 12 from the closed configuration to the open configuration.

Furthermore, the vanes 12 can be maintained normally in the closed configuration, so that the aerodynamic drag is normally minimized, with the exception of the cases where the open configuration is more useful or convenient, for example when it is suitable to cool specific components of the wheel 4 or for braking the motor vehicle 1.

Furthermore, the mechanism 14 is particularly simple, reliable and effective.

The operation of the motors 15 or more in general of the drive assembly formed by the motors 15 and by the mechanism 14 can be powered by means of the rotation of the wheel 4, therefore the wheel 4 is efficient from the energy point of view.

Finally, it is clear that modifications and variations can be made to the wheel 4 according to the invention, which anyway do not depart from the scope of protection defined by the claims.

In particular, each one of the details included in the figures is independent of the other details and is specifically thought for solving specific technical problems in isolation with respect to the other details.

In particular, the mentioned details include each one of the arrangements of the various illustrated components relative to the other components.

More in particular, the illustrated shapes and dimensions are merely exemplifying and are not inextricably linked to the arrangement of the components.

## Claims

1. **-** Wheel (4) for a vehicle (1), the wheel (4) comprising a rim (5) having a rotation axis (H) and one or more openings (5d, 11) for placing an inner volume (V) of the rim (5) in communication with a space outside the rim (5) and in front of the rim (5) according to the rotation axis (H), **characterized by** comprising one or more vanes (12) coupled to the rim (5) in a movable manner between a closed configuration and an open configuration, wherein the one or more vanes (12) close and open at least partially the one or more openings (5d, 11), respectively.

2. **-** The wheel (4) according to claim 1, wherein the one or more openings (5d, 11) place said inner volume (V) in direct communication with said outer space.

3. **-** The wheel (4) according to claim 1 or 2, further comprising a rim cover (10) fixed with respect to or forming part of the rim (5), wherein the rim (5) has an end (5c) according to the rotation axis (H), the end (5c) being annular and delimiting internally a first opening (5d) covered frontally and partially by the rim cover (10) according to the axis (H), the rim cover (10) having one or more second through openings (11) defined by said one or more openings (5d, 11).

4. **-** The wheel according to claim 3, wherein the second through openings (11) and the vanes (12) have respective shapes or cross-sections according to an orthogonal plane or respective planes incident to the rotation axis (H) with shapes tapered radially toward the rotation axis (H).

5. **-** The wheel according to any one of the preceding claims, wherein the one or more vanes (12) are pivoted to the rim (5) about respective radial axes (R) with respect to the rotation axis (H), whereby the one or more vanes (12) are rotatable about the respective radial axes (R) between the closed configuration and the open configuration.

6. **-** The wheel according to any one of the preceding claims, comprising a mechanism (14) drivable to move the one or more vanes (12) in a coordinated manner from the closed configuration to the open configuration and vice versa.

7. **-** The wheel according to claim 6, wherein the mechanism (14) comprises a rotor (16) supported by the rim (5) in a rotatable manner with respect to the rim (5) about the rotation axis (H) and one or more transmissions (20) respectively configured to transmit a rotation of the rotor (16) to the one or more vanes (12) in a predefined manner.

8. **-** The wheel according to claim 7, wherein the mechanism (14) comprises at least one pinion gear (18), and wherein the rotor (16) comprises a crown gear arranged around the rotation axis (H) so as to mesh with the pinion gear (18), such that a rotation of the pinion gear (18), for example by means of a motor (15), causes the rotation of the rotor (16).

9. **-** The wheel according to claim 7 or 8, wherein at least one of the one or more vanes (12) and at least one of the transmissions (20) respectively comprise a pivot (13) and a crank (21) having a first end (21a) fixed with respect to the pivot (13) and a second end (21b) coupled or hinged to the rotor (16).

10. **-** The wheel according to any one of claims 6 to 9, comprising a drive assembly, in turn comprising the mechanism (14) and at least one motor (15) arranged to drive the mechanism (14), and a control unit configured to control the drive assembly so as to move the one or more vanes between the closed configuration and the open configuration, based on an operational state of the vehicle (1) or the wheel (4), or based on a request from a driver of the vehicle (1).

11. **-** The wheel according to claim 10, wherein the operational state comprises the temperature of one or more components of the wheel (4) or the vehicle (1).

12. **-** The wheel according to claim 10, wherein the operational state comprises a requested deceleration of the vehicle (1) or wherein the driver's request is a request for braking the vehicle (1).
